# FASCICULE DE BREVET EUROPEEN

(11) **EP 2 551 482 B1**
(45) Date de publication et mention de la délivrance du brevet: **21.01.2015**
(21) Numéro de dépôt: 12172131.0
(22) Date de dépôt: 15.06.2012
(51) Int. Cl.: F01N 3/20

(54) **Ensemble coude de post-traitement des gaz d'echappement d'un moteur à combustion comportant un convergent interne**
Bogenförmige Anordnung zur Nachbehandlung der Abgase eines Verbrennungsmotors, die ein internes Einlaufrohr umfasst
Elbow assembly for post-treatment of the exhaust gases of a combustion engine comprising an internal diffuser

(30) Priorité: 28.07.2011 FR 1156896
(43) Date de publication de la demande: 30.01.2013
(73) Titulaire: PEUGEOT CITROËN AUTOMOBILES SA, 78140 Velizy-Villacoublay (FR)
(72) Inventeur: Lere, Sylvain, 75018 Paris (FR); Ferrand, Nicolas, 78500 Sartrouville (FR); Chapel, Julien, 77380 Combs la Ville (FR)

(56) Documents cités:
- WO-A1-01/04466
- WO-A2-2009/024815
- JP-A- 2006 132 393
- US-A1- 2010 083 643

## Description

L'invention porte sur le domaine des moyens de dépollution des gaz d'échappement d'un moteur à combustion.

Les émissions polluantes des moteurs à combustion équipant les véhicules automobiles sont réglementées par des normes de plus en plus sévères. Les polluants réglementés sont, selon la technologie de moteur à combustion considérée, le monoxyde de carbone (CO), les hydrocarbures imbrûlés (HC), les oxydes d'azotes (NOx), et les particules.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Par exemple, pour satisfaire aux normes anti-pollution sur les émissions d'oxydes d'azote (NOx), un système spécifique de post-traitement peut être introduit dans la ligne d'échappement des véhicules, notamment des véhicules équipés de moteurs à mélange pauvre, c'est-à-dire du type diesel ou à allumage commandé fonctionnant avec un mélange stratifié (mélange carburé non-homogène présentant un taux de carburant inférieur à la stoechiométrie). Pour le traitement des oxydes d'azote (NOx), on connaît des technologies de réduction catalytique sélective, ou « SCR » pour « selective catalytic reduction », qui consistent à réduire les NOx par introduction d'un agent réducteur (ou d'un précurseur d'un tel agent réducteur) dans les gaz d'échappement. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse.

On parlera dans la suite du présent document d'une manière générale de « réducteur » pour désigner un agent réducteur ou un précurseur d'agent réducteur.

En outre, il est possible d'employer un filtre à particules portant une imprégnation catalytique SCR en tant que catalyseur SCR. Dans l'ensemble du présent document, il convient donc d'interpréter l'expression « catalyseur SCR » comme pouvant désigner un catalyseur dédié spécifiquement à la fonction de réduction catalytique sélective des oxydes d'azote, ou un filtre à particules portant une imprégnation catalytique de réduction catalytique sélective des oxydes d'azote.

Classiquement, le catalyseur SCR est placé sous la caisse du véhicule équipé, loin du moteur car le réducteur injecté nécessite un long parcours dans la ligne d'échappement pour se décomposer d'une part, et des volumes libres suffisants pour être implanté d'autre part. Si la distance parcourue par le réducteur n'est pas suffisante le risque d'encrassement de la ligne d'échappement est important.

Or, s'il est placé loin de la sortie du collecteur d'échappement du moteur, ou de la sortie de la turbine dans le cas d'un moteur suralimenté, le catalyseur SCR peut ne pas être actif dès les premières secondes de fonctionnement du véhicule, et laisse alors passer une quantité importante d'oxydes d'azote non traités. De même, l'injecteur de réducteur, qui nécessite d'atteindre un certain niveau de température pour être opérationnel (amorçage suffisant de la décomposition du précurseur d'urée sous forme liquide ou préchauffage du système de mise à disposition de réducteur gazeux), souffre de cet éloignement de la sortie du collecteur d'échappement.

Il est connu de la demande de brevet français déposée au nom de la demanderesse sous le numéro FR 11 51374 (non publiée à ce jour) un système regroupant les mêmes éléments de dépollution dans une architecture compacte en « U ». Il est également connu de la demande de brevet français déposée au nom de la demanderesse sous le numéro FR 1153159 (non publiée à ce jour) un système regroupant les mêmes éléments de dépollution dans une architecture compacte en « L ». De tels dispositifs peuvent être totalement implantés en sous-capot moteur. Il est également connu du document WO 01/04466 une enveloppe contenant un catalyseur pour générer du NO2 et un filtre à particules qui est isolé thermiquement de l'enveloppe et qui est entouré par un monolithe annulaire comprenant un catalyseur d'oxydation de NO ou un catalyseur SCR. Il est également connu du document WO 2009/024815 un système d'échappement comportant un trajet d'écoulement comprenant un dispositif de contrôle d'émission dans une première partie du trajet d'écoulement, un injecteur de liquide positionné de façon à injecter un liquide dans une deuxième partie du trajet d'écoulement après la première partie, et un dispositif de contrôle d'émission catalytique dans une troisième partie du trajet d'écoulement après la deuxième partie, la deuxième partie définissant une chambre de collecte, servant à collecter un gaz d'échappement une fois qu'il est sorti du dispositif de contrôle d'émission, ladite chambre de collecte alimentant le gaz d'échappement dans une zone d'étranglement de la deuxième partie, la zone d'étranglement comprenant un tuyau ayant une partie qui fait saillie dans la chambre de collecte.

L'adoption d'un tel dispositif de post-traitement offre, outre des avantages en termes de performances des moyens de post-traitement, des avantages en termes d'implantation des systèmes dans le véhicule, en supprimant tout moyen de post-traitement de la zone sous-plancher du véhicule.

Il nécessaire dans tout système SCR d'assurer un bon mélange du réducteur dans les gaz d'échappement préalablement à son arrivée sur le catalyseur SCR, afin d'assurer un traitement efficace des oxydes d'azote et d'éviter le passage dans l'atmosphère de réducteur. Dans un ensemble de dépollution compact, et notamment dans un ensemble en « U » ou en « L », la longueur et le volume disponible dans l'ensemble pour assurer la fonction de mélange sont particulièrement réduits.

Il est connu d'employer pour favoriser ce mélange un dispositif appelé mélangeur, interposé entre le point d'injection de réducteur et le catalyseur SCR, qui vise à créer des turbulences dans les gaz d'échappement.

Il existe de nombreux type de mélangeurs adaptés à cet usage. Les mélangeurs sont optimisés pour réduire autant que possible la longueur de la ligne d'échappement nécessaire à l'obtention d'une bonne homogénéité du mélange réducteur/gaz d'échappement. On connait par exemple au travers du document FR2947003 un mélangeur performant pour assurer un mélange homogène sur une longueur linéaire de ligne d'échappement très courte.

Les mélangeurs sont cependant des dispositifs souvent complexes, et adaptés à une ligne d'échappement dans laquelle les différents dispositifs de dépollutions sont disposés les uns à la suite des autres, dans une disposition longitudinale classique. La plupart des mélangeurs connus sont cylindriques et doivent être disposés dans une enveloppe ou « canning » cylindrique.

Ces dispositifs ne sont pas donc adaptés à une architecture compacte coudée, notamment en « U » ou en « L », car le mélange ne peut pas être effectué par un mélangeur traditionnel dans des parties non droites et/ou non cylindriques. De plus ces dispositifs engendrent des pertes de charge non négligeables, qui pénalisent la performance du moteur équipé.

L'objet de l'invention est de proposer des moyens pour assurer un mélange homogène d'un fluide introduit dans les gaz d'échappement d'un moteur à combustion, dans le cadre d'une architecture d'un dispositif de post-traitement des gaz d'échappement compact présentant une enveloppe (canning) unique et coudée, par exemple en « U » ou en « L », en tirant profit de cette configuration pour garantir la fonction de mélange de manière efficace, simple, et à un coût réduit.

Plus précisément, l'invention porte donc sur un ensemble de post-traitement des gaz d'échappement d'un moteur à combustion, comportant, selon le sens d'écoulement des gaz d'échappement du moteur dans ledit ensemble :
- un catalyseur d'oxydation ;
- une embouchure d'un moyen d'introduction (5) de réducteur SCR ;
- un catalyseur SCR ;
l'ensemble étant disposé dans une enveloppe coudée entre le catalyseur d'oxydation et le catalyseur SCR ;
l'embouchure des moyens d'introduction étant située dans le coude de l'enveloppe, l'ensemble comportant un convergent interne à l'enveloppe entre le catalyseur d'oxydation et le coude, ledit convergent débouchant en regard de l'embouchure des moyens d'introduction de réducteur SCR dans une zone d'injection desdits moyens d'introduction, les gaz sortant du convergent étant dirigés vers la paroi extérieure du coude de sorte à être confinés dans le coude, au niveau de la zone d'injection.
Les gaz sortent ainsi du convergent dans la zone d'injection de l'injecteur, et sont confinés dans le coude avant de se répartir de manière assez homogène entre le coude et le catalyseur SCR.

De préférence, l'entrée du convergent couvre toute la section de l'enveloppe de sorte que l'ensemble d'un flux gazeux circulant dans l'ensemble pénètre dans le convergent.

Selon une variante de l'invention, le convergent présente des parois au moins en partie ajourées par des orifices. Une part des gaz pénétrant dans le convergent vont le traverser via les orifices. Cela limite l'efficacité du dispositif, mais réduit les pertes de charges générées. On peut ainsi obtenir le compromis souhaité, en fonction de l'application considérée, entre efficacité d'homogénéisation du mélange entre les gaz et le fluide introduit d'une part, et les pertes de charges générées d'autre part.

Le convergent peut être soudé dans l'enveloppe par une soudure fixant également le catalyseur d'oxydation à l'enveloppe.

De préférence, l'enveloppe coudée présente un coude sensiblement à angle droit entre le catalyseur d'oxydation et le catalyseur SCR. Un coude à 90° ou moins, en particulier s'il présente un rayon de courbure externe faible maximise l'effet de confinement des gaz sortant du convergent, et donc son efficacité.

Selon un premier mode de réalisation, l'enveloppe présente une forme générale en « U ». De préférence, l'ensemble présente alors deux coudes sensiblement à angle droit entre le catalyseur d'oxydation et le catalyseur SCR, l'embouchure des moyens d'introduction étant située dans le premier coude.

Selon un second mode de réalisation, l'enveloppe présente une forme générale en«L».

L'invention est décrite plus en détail ci-après et en référence aux figures représentant schématiquement le système dans son mode de réalisation préférentiel.

La figure 1 présente schématiquement un ensemble de post-traitement selon une architecture en U, telle qu'envisagée dans l'état de la technique.

La figure 2 présente schématiquement un ensemble de post-traitement selon une architecture en U mettant en jeu l'invention dans une variante préférentielle.

La figure 3 présente schématiquement une autre variante de l'invention.

Un ensemble de dépollution compact en U, pour la dépollution des gaz d'échappement d'un moteur à combustion, comporte une enveloppe 1 formant une première branche droite comportant un premier pain catalytique, généralement un catalyseur d'oxydation 2, une liaison fluidique présentant un coude 3 à 90° puis un second coude 4 à 90°. L'embouchure de moyens d'introduction de réducteur 5 est implantée dans le coude 3, afin d'introduire du réducteur. L'ensemble comporte une seconde branche droite comportant un mélangeur 6 et un catalyseur SCR 7 pour la réduction catalytique sélective des oxydes d'azote (le catalyseur SCR 7 pouvant être un filtre à particule portant une imprégnation catalytique SCR).

Bien que l'ensemble des figures ici présentées porte sur une architecture de dépollution en « U », l'invention est applicable à tout ensemble présentant une enveloppe coudée, et notamment à une architecture en « L » dans laquelle l'enveloppe présente un seul coude à 90° environ.

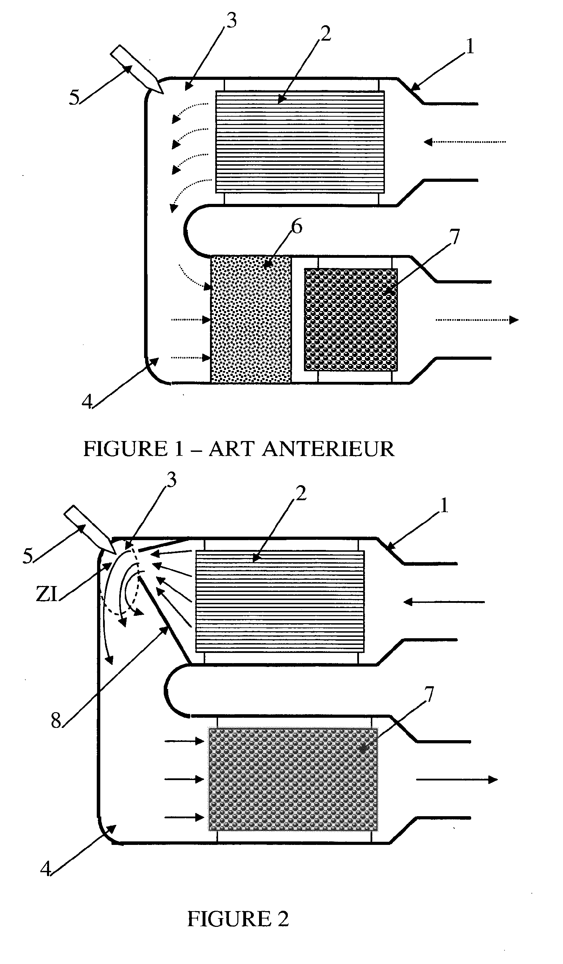

La figure 2 présente schématiquement un ensemble de post-traitement selon une architecture en U mettant en jeu l'invention dans une variante préférentielle.

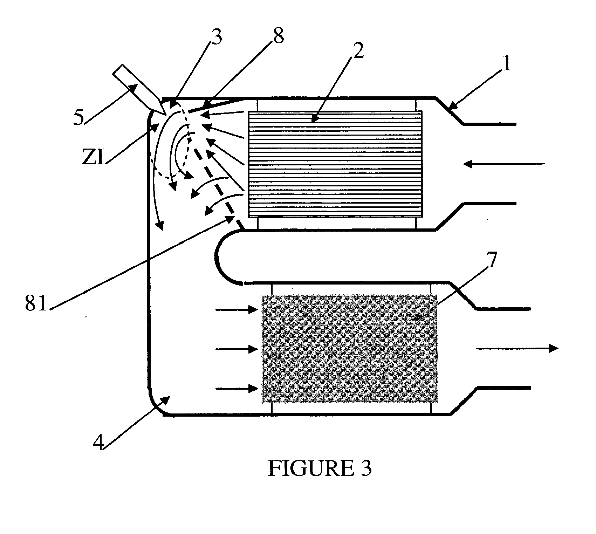

Dans l'invention, un convergent 8 est disposé dans l'enveloppe 1 entre la sortie du catalyseur d'oxydation et le coude 3, et débouche dans le coude 3 en regard de l'embouchure des moyens d'introduction 5, dans la zone d'injection (ZI) desdits moyens (telle que représentée en pointillés sur les figures 2 et 3). Les moyens d'introduction 5 comportent typiquement un injecteur.

En particulier, les gaz sortant du convergent sont dirigés vers la paroi extérieure du coude 3 de sorte à être confinés dans le coude, au niveau de la zone d'injection, avant de se répartir naturellement dans l'ensemble du raccord fluidique séparant les deux branches de l'ensemble coudé. Dans une architecture présentant un coude à 90° (par exemple une architecture d'ensemble en « U » présentant deux coudes à environ 90° entre les deux branches du « U », l'injection de réducteur étant réalisée dans le premier coude), cet effet de confinement et de mélange turbulent en sortie du coude est particulièrement marqué. L'effet de confinement sera d'autant plus important que le rayon de courbure extérieur du coude est faible.

On obtient ainsi une répartition assez homogène du réducteur dans les gaz, permettant de se passer d'un mélangeur additionnel ou au moins de se contenter pour garantir un mélange homogène d'un mélangeur présentant une faible efficacité en termes de mélange, mais générant de faibles pertes de charge. Le mélangeur additionnel, s'il est nécessaire, peut dans le cadre d'une architecture d'ensemble en « U » être positionné en amont de la seconde branche du U ou en entrée de celle-ci. Le mélangeur ayant une fonction de mélange assez faible à assurer, pourra présenter une faible longueur, ce qui libère du volume dans la seconde branche pour l'implantation de moyens de post-traitement.

La figure 3 présente schématiquement une variante de l'invention dans laquelle le convergent 8 présente des orifices 81. Les orifices permettent de doser la part du flux gazeux guidés par le convergent vers le coude 3 (par exemple de l'ordre de 75% d'un flux donné). Cela peut diminuer légèrement l'homogénéité du mélange obtenu mais réduit la perte de charge généré par le convergent. On peut ainsi par une conception de parois ajourées du convergent adaptée obtenir le compromis souhaité entre la qualité du mélange en sortie du coude 3 et la perte de charge générée par le convergent.

L'invention présente de multiples avantages qui découlent directement des effets techniques précédemment évoqués. En outre, l'ajout d'un cône convergent dans une enveloppe d'un ensemble de post-traitement a un faible coût de revient, et, dans le cadre d'une application automobile, entraine une masse supplémentaire faible (typiquement de l'ordre de 100g). La mise en place du cône dans l'enveloppe peut en outre être optimisée par l'emploi d'un unique joint de soudure pour le maintien d'un côté du catalyseur d'oxydation dans l'enveloppe et la fixation du cône convergent.

## Revendications

1. Ensemble de post-traitement des gaz d'échappement d'un moteur à combustion, comportant, selon le sens d'écoulement des gaz d'échappement du moteur dans ledit ensemble :
• un catalyseur d'oxydation (2);
• une embouchure d'un moyen d'introduction (5) de réducteur SCR ;
• un catalyseur SCR (7) ;
l'ensemble étant disposé dans une enveloppe (1) coudée entre le catalyseur d'oxydation (2) et le catalyseur SCR (7) ;
l'embouchure des moyens d'introduction (5) étant située dans le coude (3) de l'enveloppe, **caractérisé par** un convergent (8) interne à l'enveloppe (1) entre le catalyseur d'oxydation (2) et le coude (3), ledit convergent (8) débouchant en regard de l'embouchure des moyens d'introduction (5) de réducteur SCR dans une zone d'injection desdits moyens d'introduction, les gaz sortant du convergent étant dirigés vers la paroi extérieure du coude (3) de sorte à être confinés dans le coude (3), au niveau de la zone d'injection.

2. Ensemble selon la revendication 1, dans lequel l'entrée du convergent (8) couvre toute la section de l'enveloppe 1 de sorte que l'ensemble d'un flux gazeux circulant dans l'ensemble pénètre dans le convergent.

3. Ensemble selon la revendication 1 ou la revendication 2 dans lequel le convergent (8) présente des parois au moins en partie ajourées par des orifices (81).

4. Ensemble selon l'une quelconque des revendications précédentes, dans lequel le convergent (8) est soudé dans l'enveloppe par une soudure fixant également le catalyseur d'oxydation (2) à l'enveloppe (1).

5. Ensemble selon l'une des revendications précédentes, dans lequel l'enveloppe (1) coudée présente un coude (3) sensiblement à angle droit entre le catalyseur d'oxydation (2) et le catalyseur SCR (7).

6. Ensemble selon l'une des revendications précédentes, dans lequel l'enveloppe (1) présente une forme générale en « U ».

7. Ensemble selon la revendication 6, dans lequel l'ensemble présente deux coudes sensiblement à angle droit entre le catalyseur d'oxydation (2) et le catalyseur SCR (7), l'embouchure des moyens d'introduction (5) étant située dans le premier coude (3).

8. Ensemble selon l'une des revendications 1 à 5, dans lequel l'enveloppe (1) présente une forme générale en « L ».

## Patentansprüche

1. Nachbehandlungseinheit der Abgase eines Verbrennungsmotors, die entlang der Strömungsrichtung der Abgase des Motors in der Einheit:
• einen Oxidationskatalysator (2),
• eine Mündung eines Einführmittels (5) von SCR-Reduktionsmittel,
• einen SCR-Katalysator (7) aufweist,
wobei die Einheit in einem gebogenen Einschluss (1) zwischen dem Oxidationskatalysator (2) und dem SCR-Katalysator (7) angeordnet ist,
wobei die Mündung der Einführmittel (5) in dem Bogen (3) des Einschlusses liegt, **gekennzeichnet durch** einen Verjüngungsteil (8) innerhalb des Einschlusses (1) zwischen dem Oxidationskatalysator (2) und dem Bogen (3), wobei der Verjüngungsteil (8) gegenüber der Mündung der Einführmittel (5) des SCR-Reduktionsmittels in einer Injektionszone der Einführmittel mündet, wobei die Gase, die aus dem Verjüngungsteil austreten, zu der Außenwand des Bogens (3) derart gelenkt werden, dass sie in dem Bogen (3) im Bereich der Injektionszone eingeschlossen sind.

2. Einheit nach Anspruch 1, bei der der Eingang des Verjüngungsteils (8) den gesamten Querschnitt des Einschlusses (1) derart abdeckt, dass ein Gasstrom, der in der Einheit zirkuliert, vollständig in den Verjüngungsteil eindringt.

3. Einheit nach Anspruch 1 oder Anspruch 2, bei der der Verjüngungsteil (8) Wände aufweist, die mindestens zum Teil von Öffnungen (81) durchbrochen sind.

4. Einheit nach einem der vorhergehenden Ansprüche, bei der der Verjüngungsteil (8) in den Einschluss durch eine Schweißung geschweißt ist, die auch den Oxidationskatalysator (2) an dem Einschluss (1) befestigt.

5. Einheit nach einem der vorhergehenden Ansprüche, bei der der gebogene Einschluss (1) einen Bogen (3) im Wesentlichen mit rechtem Winkel zwischen dem Oxidationskatalysator (2) und dem SCR-Katalysator (7) aufweist.

6. Einheit nach einem der vorhergehenden Ansprüche, bei der der Einschluss (1) eine allgemeine "U"-Form aufweist.

7. Einheit nach Anspruch 6, bei der die Einheit zwei Bögen mit im Wesentlichen rechtem Winkel zwischen dem Oxidationskatalysator (2) und dem SCR-Katalysator (7) aufweist, wobei die Mündung der Einführmittel (5) in dem ersten Bogen (3) liegt.

8. Einheit nach einem der Ansprüche 1 bis 5, bei der der Einschluss (1) eine allgemeine L-Form aufweist.

## Claims

1. An assembly for post-treatment of the exhaust gases of a combustion engine, comprising, along the flow direction of the exhaust gases of the engine in the said assembly:
▪ an oxidation catalyst (2);
▪ an orifice of an introduction means (5) of SCR reducer;
▪ an SCR catalyst (7);
the assembly being disposed in a bent envelope (1) between the oxidation catalyst (2) and the SCR catalyst (7);
the orifice of the introduction means (5) being situated in the elbow (3) of the envelope, **characterized by** an internal convergent (8) to the envelope (1) between the oxidation catalyst (2) and the elbow (3), the said convergent (8) opening opposite the orifice of the introduction means (5) of SCR reducer in an injection zone of the said introduction means, the gases exiting from the convergent being directed towards the exterior wall of the elbow (3) so as to be confined in the elbow (3), at the level of the injection zone.

2. The assembly according to Claim 1, in which the inlet of the convergent (8) covers the entire section of the envelope (1) such that the whole of a gaseous flow circulating in the assembly penetrates into the convergent.

3. The assembly according to Claim 1 or Claim 2, in which the convergent (8) has walls which are at least partially perforated by orifices (81).

4. The assembly according to any one of the preceding claims, in which the convergent (8) is welded in the envelope by a weld, likewise fixing the oxidation catalyst (2) to the envelope (1).

5. The assembly according to one of the preceding claims, in which the bent envelope (1) has an elbow (3) substantially right-angled between the oxidation catalyst (2) and the SCR catalyst (7).

6. The assembly according to one of the preceding claims, in which the envelope (1) has a general U-shape.

7. The assembly according to Claim 6, in which the assembly has two elbows substantially right-angled between the oxidation catalyst (2) and the SCR catalyst (7), the orifice of the introduction means (5) being situated in the first elbow (3).

8. The assembly according to one of Claims 1 to 5, in which the envelope (1) has a general L-shape.
